# EUROPEAN PATENT APPLICATION

(11) **EP 0 877 054 A1**
(43) Date of publication of application: **11.11.1998**
(21) Application number: 98303214.5
(22) Date of filing: 24.04.1998
(51) Int. Cl.: C08L 25/04, C08L 25/12, C08L 55/02, C08L 91/00

(54) **Compositions containing styrene polymers and blends thereof**

(30) Priority: 06.05.1997 FR 9705580
(71) Applicant: GENERAL ELECTRIC COMPANY, Schenectady, NY 12345 (US)
(72) Inventor: Dumont, Jean-Marie, 60140 Rosoy par Liancourt (FR)
(74) Representative: Szary, Anne Catherine, Dr.

(57) **Abstract**

Compositions containing styrene polymers, styrene copolymers or their blends and articles moulded from these compositions having an increased resistance to surface marking comprise, with respect to the total weight of the polymers and/or copolymers present in the compositions:
a) less than 0.5% of internal lubricant; and
b) 3 to 10% of paraffin.

## Description

The present invention generally relates to compositions containing styrene polymers and copolymers and containing their blends which make it possible to obtain moulded articles having increased resistance to frictional marking.

Compositions containing styrene polymers and copolymers, such as impact polystyrenes and acrylonitrile-butadiene-styrene resins (ABS resins) are compositions which are widely used for the manufacture of moulded articles, in particular consumer goods, such as food utensils, for example meal plates, dishes, cups, and the like, or alternatively telephone socket housings.

One fault of articles moulded from these compositions containing styrene polymers and copolymers or containing their blends is their low resistance to surface marking by impacts or frictional contacts, for example between the moulded articles themselves during their handling and/or use.

Thus, during their manufacture, moulded articles are often transported by means of conveyor belts to storage and/or packing sites. During this transportation, inter alia, the articles frequently knock and rub against each other, resulting in the appearance on their surfaces of marks, such as scratches, which results in a large number of articles being rejected.

The subject of the present invention is thus new compositions containing styrene polymers and copolymers or containing their blends which make it possible to obtain moulded articles having an increased resistance to surface marking and the moulded articles thus obtained.

It has been found according to the invention that by incorporating from 3 to 10% by weight of paraffin, as external lubricant, with respect to the total weight of the polymers and/or copolymers in the composition, in a composition containing styrene polymers, styrene copolymers or containing their blends holding less than 0.5% by weight of internal lubricant with respect to the total weight of the polymers and/or copolymers in the composition, a composition is obtained which makes it possible to obtain moulded articles having an increased resistance to surface marking, without harming the other properties.

In addition, the compositions according to the invention increase the Izod impact strength, the Vicat temperature (thermal behaviour) and the ease with which the moulded articles are removed from the moulds.

The incorporation of significant amounts of paraffin in the compositions according to the invention also lowers the fluidity of the compositions, which is advantageous in the manufacture of articles by extrusion-moulding.

It has also been found that, in low-temperature moulding (150-250°C, preferably 180-230°C) , paraffin has a cleansing effect on the barrels of injection moulding machines or extrusion lines.

The composition containing styrene polymers, styrene copolymers or containing their blends according to the invention is characterized in that it comprises, with respect to the total weight of the polymers and/or copolymers in the composition:
a) less than 0.5% of internal lubricant; and
b) 3 to 10%, preferably 3 to 5%, of paraffin.

Styrene polymers, copolymers and their blends are well known.

Mention may be made, amongst styrene polymers and copolymers which are useful in the compositions of the present invention, of styrene homopolymers, alkyl-styrene, such as α-methylstyrene, homopolymers, high impact-strength polystyrenes (HIPS) and grafted styrene polymers.

A recommended class of styrene polymers and copolymers useful in the compositions of the present invention is high impact-strength polystyrene (HIPS). These high impact-strength polymers are generally prepared by the polymerization with grafting of mixtures of styrene and optionally of one or of several additional copolymerizable vinyl monomers in the presence of a rubbery polymer backbone. Analogous resins can also be prepared by mixing a rigid-matrix polymer with a grafted rubbery backbone. The comonomers which can be used in mixtures with styrene for the preparation of rigid styrene copolymers and for use as grafting monomers comprise monomers chosen from the following forms: ethylstyrene, halostyrenes, vinylaklylbenzenes, such as vinyltoluene, vinylxylene and butylstyrene, acrylonitrile, methacrylonitrile, lower alkyl esters of methacrylic acid and mixtures of these. In high impact-strength styrene resins, the rubbery polymer backbone normally constitutes from 5 to 80%, preferably 5 to 50%, of the total weight of the grafted polymer and comprises rubbery copolymers chosen from polybutadiene, polyisoprene, rubbery styrene-diene copolymers, acrylic rubber, nitrile rubber and olefinic rubbers, such as PDM and PR.

In addition, other styrene polymers known in the art can be used in the blend compositions of the invention.

Mention may be made, as specific examples of grafted polymers and copolymers useful in the compositions of the present invention, of resins of emulsion and bulk acrylonitrile/butadiene/styrene (ABS) polymer type, methyl methacrylate/butadiene/acrylonitrile/styrene (MABS) resins, resins of styrene/butadiene grafted polymer type (HIPS) and methyl methacrylate/butadiene/ styrene/MBS) [sic] resins.

Mention may be made, as specific example of styrene polymers and copolymers which can be used in the present invention, of polystyrene and styrene copolymers, such as styrene/acrylonitrile (SAN) copolymers, styrene/methacrylic ester copolymers, resins of styrene/acrylonitrile/maleic anhydride (SAMA) terpolymer type, resins of styrene/maleic anhydride (SMA) copolymer type, similar polymers comprising N-phenyl substituted maleimides and differently substituted maleimides and similar and mixtures of these. In addition, it is also possible to use styrene-butadiene styrene (SBS) copolymers and synthetic butyl rubbers (SBR). Moreover, it is also possible to use analogous copolymer resins in which a portion of the styrene monomer component is replaced by other styrene monomers, such as α-methylstyrene, halogenated styrenes or vinyltoluene. It is also possible to use mixtures or blends of the above styrene polymers and copolymers, Finally, it is also possible to use mixtures of above styrene polymers and copolymers and of one or more poly(phenylene ether)s, polymers of poly(vinyl chloride) type, polyamides, polycarbonates and other polymers generally known in the art for blending with styrene polymers. These additional polymers are generally known in the art and are described in Moderne [sic] Plastic Encyclopedia, 1986-1987, McGraw-Hill Inc, New York, USA.

Styrene polymers which are useful in the present invention also comprise polymers with the core-shell structure. Styrene polymers are generally prepared by emulsion or bulk, emulsion-bulk or bulk-suspension polymerization.

Styrene polymers which are particularly recommended for the compositions of the present invention are ABS resins, in particular ABS resins containing from 4 to 70% by weight of butadiene with respect to the total weight of the resin, and blends of ABS resins and of styrene/acrylonitrile (SAN) copolymers. When the ABS resin is in the granular form, it preferably contains 4 to 40% by weight of butadiene and better still 4 to 30% by weight.

Blends which are particularly recommended for the compositions of the invention are ABS/SAN blends containing 10 to 80 parts by weight of ABS resins and 90 to 20 parts by weight of SAN copolymer. Resins which are recommended for the compositions of the invention are preferably ABS/SAN blends containing 10 to 40 parts by weight of ABS resin and 90 to 60 parts by weight of SAN copolymer.

Mention may be made, among acrylic and methacrylic polymers and copolymers useful in the present invention, of copolymers of acrylic acid derivatives, for example acrylic esters, with styrene, vinyl chloride, methacrylic acid derivatives and acetic acid esters, poly(alkyl methacrylate)s, such as poly(methyl methacrylate), and poly(alkyl acrylate)s.

Mention may be made, among vinyl polymers and copolymers, of poly(vinyl chloride), poly(vinyl acetate), poly(vinylbenzene)s, ethylene-vinyl acetate copolymers and poly(vinyl alcohol)s.

An important characteristic of the compositions of the invention is that the content of internal lubricant is less than 0.5% by weight with respect to the total weight of the polymers and copolymers present in the compositions. The internal lubricant preferably represents less than 0.1% by weight and better still the compositions according to the invention are totally devoid of internal lubricant.

Internal lubricants of compositions containing styrene polymers and copolymers are well known adjuvants and mention may be made, by way of example, of metal stearates and ethylene bissteramide wax.

The essential characteristic of the present invention is the use in the compositions of 3 to 10%, preferably 3 to 5, by weight of paraffin, which is an external lubricant. For contents of less than 3% by weight of paraffin, the desired effect of resistance to surface marking is not obtained while, for amounts greater than 10% by weight, there is no significant improvement in this property.

Paraffin is understood to mean in the present application any product comprising at least 95% by weight of paraffin.

Paraffin is a complex product obtained from oil and natural gas. In the context of the present invention, the term paraffin covers paraffin wax, which is a white-coloured solid composed of alkanes or saturated hydrocarbons, and paraffin oils, which are viscous liquids also composed of a mixture of saturated hydrocarbons. Paraffin wax is generally composed of a mixture of linear or branched alkanes in which the number of carbon atoms varies from 20 to 40. In paraffin oils, the alkanes have shorter chains, up to approximately 10 carbon atoms.

Paraffin wax is mainly used as external lubricant for certain plastics, such as poly(vinyl chloride).

Such a paraffin-based external lubricant is sold by the company HOECHST under the trademark HOSTALUB® H4.

The compositions according to the invention can also contain adjuvants generally used in compositions containing styrene polymers, such as pigments, dyes, UV stabilizers, antioxidants, flame-retardants, antistatic agents and extending and/or reinforcing fillers.

Mention may be made, among inorganic fillers which can be used in the compositions of the present invention, of talc, barium sulphate, calcium carbonate, magnesium aluminium hydroxycarbonate and calcium aluminium hydroxycarbonate.

The flame-retardants which can be used in the compositions of the present invention are any flame-retardant or mixture of flame-retardants known to confer a flame-retardant nature on compositions based on polyolefins or on styrene polymers. Mention may be made, among flame-retardants, of flame-retardant organic compounds, such as tetrabromobisphenol, bistribromophenoxyethane, polybromodiphenyl ether polybromophenole, polybromophenyl alkyl ethers, polybromobenzyl acrylate or polyacrylate, polybromocyclododecane, polybromostyrene, polybromophenylmaleimide, brominated epoxy monomers or epoxy polymers, or copolycarbonates derived from a halo-substituted diphenol and from a diphenol, the halogen preferably being chlorine or bromine.

Use may also be made, as flame-retardant, of phosphate compounds, in particular organic phosphates.

Preferably, again, the halogenated organic flame-retardant is used in combination with a synergistic compound, such as an antimony compound, for example antimony oxide.

The compositions of the present invention can also contain dyes and pigments, such as, for example, titanium oxide, ultramarine blue or carbon black.

The present invention also relates to the use, in improving the resistance to surface marking of articles manufactured from a composition containing styrene polymers, styrene copolymers or containing their blends comprising, with respect to the total weight of the polymers and/or copolymers present in the composition, less than 0.5% of internal lubricant, of 3 to 10%, preferably 3 to 5%, by weight of paraffin as external lubricant.

In the examples below, except when otherwise indicated, all the percentages and parts are expressed by weight.

### EXAMPLES

The compositions in Table I below were prepared by mixing the various ingredients:

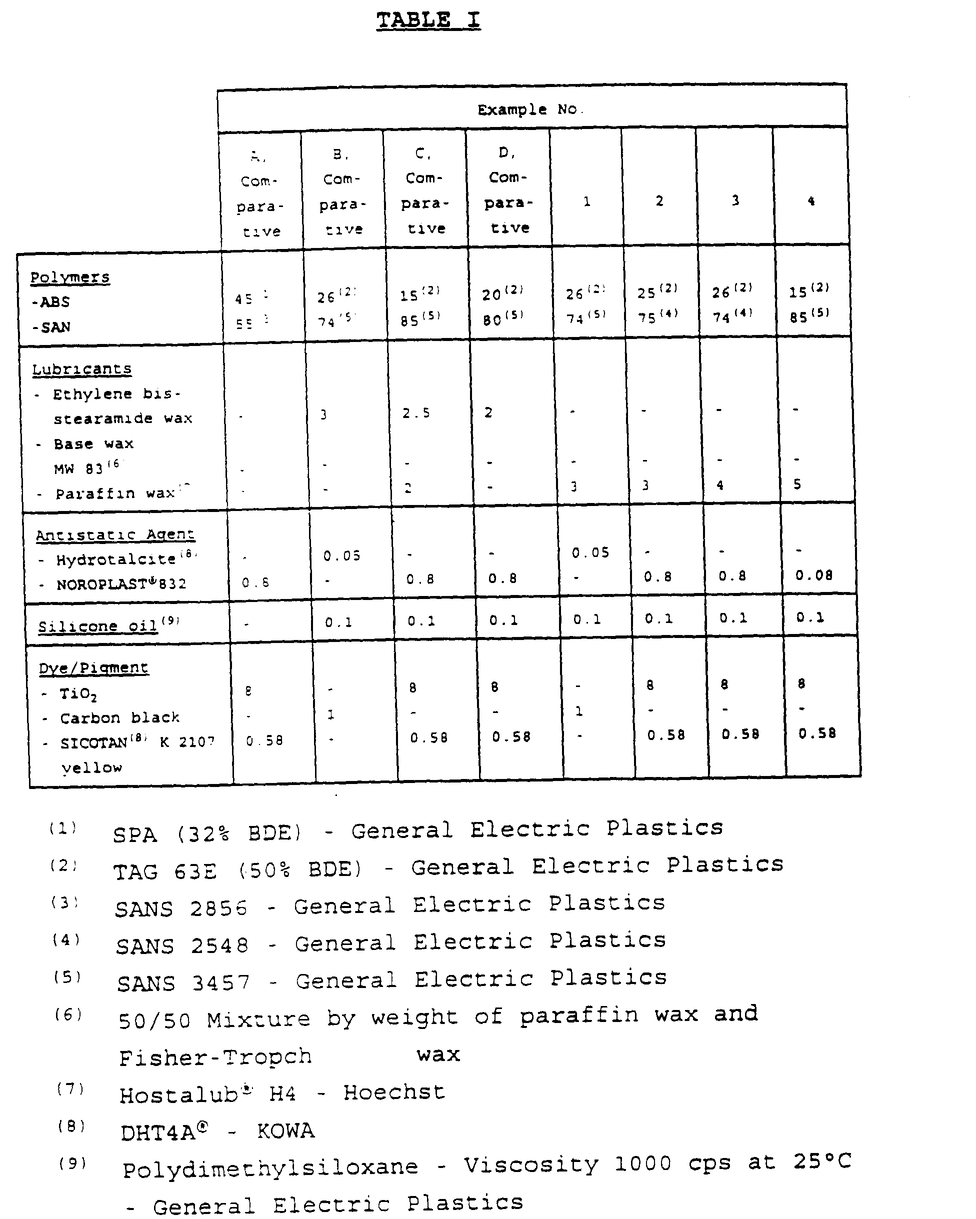

The physical and mechanical properties of the compositions of Comparative Example B and of Example 1 were determined. The results are shown in Table II below.

**TABLE II**

| | **Comparative Example B** | **Example 1** |
|---|---|---|
| Flow index (220°C/10 kg), g/10 minutes | 27.0 | 16.1 |
| | | |
| Melting viscosity at 230°C/1000 s⁻¹. Pa.s | 222 | 265 |
| VICAT B 120 Temperature, °C | 102 | 104 |
| DIN Hardness | 93.9 | 93.0 |
| | | |
| IZOD/1A impact strength, kJ/m² | 11.1 | 13.5 |
| Flexion | | |
| · stress, MPa | 69 | 65 |
| · modulus, MPa | 2600 | 2530 |
| Tension | | |
| · yield point stress, MPa | 45 | 41 |
| · breaking stress, MPa | 38 | 37 |
| · elongation at break, % | 48 | 47 |
| Gloss | | |
| · Angle 20° | 79 | 71 |
| · Angle 40° | 93.5 | 91 |

The results show that the mechanical properties obtained with the compositions according to the invention are comparable with those of the compositions of the prior art and that a slight increase in the impact strength is even observed.

### Test of marking caused by friction

Plates with dimensions of 90 mm × 70 mm × 4 mm were moulded at 240°C from the compositions A, C, D and 2 to 4 in the above Table I.

A plate of one composition was rubbed with the corner of another plate of the same composition 3 to 4 times at different points. The traces left on the rubbed plate were observed and the width of these traces was measured.

The narrower the traces, the better the resistance of the composition to marking by friction.

The results are given in Table III below.

**TABLE III**

| | **Examples** | | | | | |
|---|---|---|---|---|---|---|
| | Comparative A | Comparative C | Comparative D | 2 | 3 | 4 |
| Width of the trace or mark in mm | 1.2 | 1.5 | 1.5 | 0.9 | 0.5 | 0.2 |

The results show the excellent resistance of the compositions according to the invention to marking by friction.

In addition, Comparative Example C shows that the addition of paraffin to a composition containing 2.5% by weight of internal lubricant does not allow the desired result to be obtained.

## Claims

1. Composition containing styrene polymers, styrene copolymers or containing their blends, characterized in that it comprises, with respect to the total weight of the polymers and/or copolymers in the composition
(a) less than 0.5% of internal lubricant; and
(b) 3 to 10%, preferably 3 to 5%, of paraffin.

2. Composition according to Claim 1, characterized in that it comprises less than 0.1% by weight of internal lubricant.

3. Composition according to Claim 1, characterized in that it does non include internal lubricant.

4. Composition according to any one of Claims 1 to 3, characterized in that the styrene polymers and copolymers are chosen from homopolymers and copolymers of styrene, of alkylstyrene , high impact-strength polystyrenes (HIPS) and grafted styrene polymers and copolymers.

5. Composition according to Claim 4, characterized in that the styrene polymers and copolymers are chosen from acrylonitrile/butadiene/styrene (ABS) resins, methyl methacrylate/butadiene/acrylonitrile/styrene (MABS) resins, grafted styrene/butadiene (HIPS) resins, methyl methacrylate/butadiene/styrene (MBS) resins, styrene/acrylonitrile (SAN) copolymers, styrene/methacrylic ester copolymers, styrene/acrylonitrile/maleic anhydride (SAMA) resins, styrene/maleic anhydride resins, styrene/butadiene/styrene (SBS) copolymers, butyl rubbers (SBR) and their mixtures.

6. Composition according to Claim 5, characterized in that the styrene polymers and copolymers are chosen from ABS resins and blends of ABS resins and of SAN copolymers.

7. Composition according to any one of Claims 1 to 6, characterized in that it comprises one or more adjuvants chosen from fillers, pigments, dyes, UV stabilizers, antioxidants, flame-retardants and antistatic agents.

8. Use, in improving the resistance to surface marking of articles manufactured from a composition containing styrene polymers, styrene copolymers or containing their blends comprising, with respect to the total weight of the polymers and/or copolymers present in the composition, less than 0.5% of internal lubricant, of 3 to 10%, preferably 3 to 5%, by weight of paraffin.

9. Article moulded from a composition according to any one of Claims 1 to 7.
